Europäisches Patentamt

European Patent Office

Office européen des brevets

(19)

(11) Veröffentlichungsnummer: **0 208 903 B1**

(12) **EUROPÄISCHE PATENTSCHRIFT**

(45) Veröffentlichungstag der Patentschrift: **04.09.91**

(21) Anmeldenummer: **86107793.1**

(22) Anmeldetag: **07.06.86**

(51) Int. Cl.⁵: **G06F 1/00, F16M 11/10, G05G 5/06**

(54) Datensichtgerät mit neigbarer Bildschirm-Frontfläche.

(30) Priorität: **10.07.85 DE 8519904 U**

(43) Veröffentlichungstag der Anmeldung:
**21.01.87 Patentblatt 87/04**

(45) Bekanntmachung des Hinweises auf die
Patenterteilung:
**04.09.91 Patentblatt 91/36**

(84) Benannte Vertragsstaaten:
**CH DE FR GB IT LI**

(56) Entgegenhaltungen:
**DE-A- 3 231 019      DE-C- 1 074 641
DE-U- 8 210 589      US-A- 3 572 161
US-A- 4 524 940      US-A- 4 556 189**

(73) Patentinhaber: **Mannesmann Kienzle GmbH
Postfach 1640 Heinrich-Hertz-Strasse
W-7730 Villingen-Schwenningen(DE)**

(72) Erfinder: **Fesenmeier, Hugo
Gumppstrasse 17
W-7715 Bräunlingen(DE)**

**Beschreibung**

Die Erfindung betrifft ein Datensichtgerät gemäß dem ersten Teil des Anspruchs 1.

Es ist allgemein üblich, Datensichtgeräte derart verstellbar auszubilden, daß die Bildschirm-Frontfläche der Blickrichtung eines Benutzers ergonomisch anpaßbar ist und außerdem störende Lichtreflexe vermieden werden können. In der Vergangenheit sind hierfür aufwendige Konstruktionen angewandt worden, die, weil eine Neigungsverstellung eines Datensichtgerätes lediglich bei sich verändernden Licht- und Beleuchtungsverhältnissen oder bei Benutzerwechsel in Frage kommt und in der Praxis selten vorgenommen wird, dem angestrebten, relativ untergeordneten Zweck nicht oder nur ungenügend angepaßt werden.

Beispielsweise ist es bekannt, das Datensichtgerät an einem schwenkbaren Arm teleskopartig verschiebbar zu lagern, oder dem Datensichtgerät, abgesehen von Kugelgelenkanordnungen, ein geeignetes Schwenkgestell zuzuordnen. Ebenso wurde bereits realisiert, das Bildschirmchassis innerhalb des Gehäuses des Datensichtgerätes schwenkbar anzuordnen und mittels geeigneter getrieblicher Mittel sogar motorisch zu verschwenken, oder dem Datensichtgerät ein das gesamte Gerät tragendes, mehrgliedriges Stützbein zuzuordnen. Bei einer mehr zweckorientierten Lösung gemäß dem DE-GM 82 10 589 ist eine Dreipunktauflage vorgesehen, d. h. das Datensichtgerät stützt sich auf der ihm zugeordneten Stellfläche auf zwei gehäusefesten, vorzugsweise abrollfähigen Stützen und einem vertikal verstellbaren, im Bereich der Rückwand angeordneten Standbein ab.

Zwar ist mit dieser Lösung eine relativ kostengünstige und bezüglich des Datensichtgerätes von vorn betätigbare Neigungsverstellung für die Bildschirm-Frontfläche gegeben, ein Verstellen des an der Rückwand des Datensichtgerätes mittig angeordneten Standbeines, was mittels einer Rändelschraube bzw. einer Rändelmutter erfolgt, ist jedoch bei dieser Lösung ziemlich umständlich und infolge des auf der Rändelschraube lastenden Gewichts des Datensichtgerätes wenigstens in einer Richtung nur mit einem unsympathisch hohen Kraftaufwand zu bewerkstelligen, es sei denn, das Datensichtgerät wird mit der anderen Hand angehoben und somit das Standbein entlastet.

Aufgabe der vorliegenden Erfindung war es daher, ausgehend von der an sich kostengünstigen und zweckorientierten Dreipunktauflage des Datensichtgerätes die Verstellbarkeit des höhenverstellbaren Standbeines zu verbessern, insbesondere die Handhabung beim Verstellen zu erleichtern.

Die erfindungsgemäße Lösung wird im zweiten Teil des Anspruchs 1 definiert.

Ein bevorzugtes Ausführungsbeispiel ist dadurch gekennzeichnet, daß das Standbein, wenigstens ein dem Standbein zugeordneter, gefederter Riegel und die Auslöseeinrichtung in einem mit dem Gehäuse des Datensichtgerätes verbindbaren Halter gelagert sind.

Die Erfindung bietet den Vorteil, das Datensichtgerät relativ schnell in die gewünschte Position zu bringen, und zwar mit einer Hand. Dabei ist die Zuordnung von Griffmulde und Auslöseknopf derart gewählt, daß wenn die Finger der betreffenden Hand in die an der Rückwand des Datensichtgerätes befindliche Griffmulde eingreifen, die Betätigung des an der Oberseite des Datensichtgerätes zugänglichen Auslöseknopfes mittels des Handballens, der Handwurzel oder dem Daumen erfolgen kann. Infolge der Selbsthemmung ist jedoch eine Auslösung des dem Standbein zugeordneten Riegelgesperres erst dann möglich, wenn das Riegelgesperre durch Anheben des Datensichtgerätes entlastet wird. Es besteht somit eine Bedienungssicherung insofern, daß eine mutwillige oder unabsichtliche Auslösung durch lediglich Betätigen des Auslöseknopfes, der im übrigen die Oberseite des Datensichtgerätes nur wenig überragt und sich somit harmonisch in das Gesamtbild des Gerätes einfügt, ausgeschlossen ist. Ferner ist vorteilhaft, daß mit der Erfindung ein vormontierbares, und zwar funktionsfertig vormontierbares Standbeinaggregat geschaffen worden ist, das vielseitig, wenigstens jedoch an unterschiedlichen Datensichtgerätetypen, angebracht werden kann.

Im folgenden sei die Erfindung anhand der beigefügten Zeichnungen näher erläutert. Es zeigen

FIG. 1 eine Rückansicht des erfindungsgemäßen Datensichtgerätes,

FIG. 2 eine teilweise geschnittene Ansicht des Standbeinaggregates,

FIG. 3 einen Schnitt durch die Rückwand des mit dem Standbeinaggregat versehenen Datensichtgerätes,

FIG. 4 eine Befestigungsvariante des Standbeinaggregates.

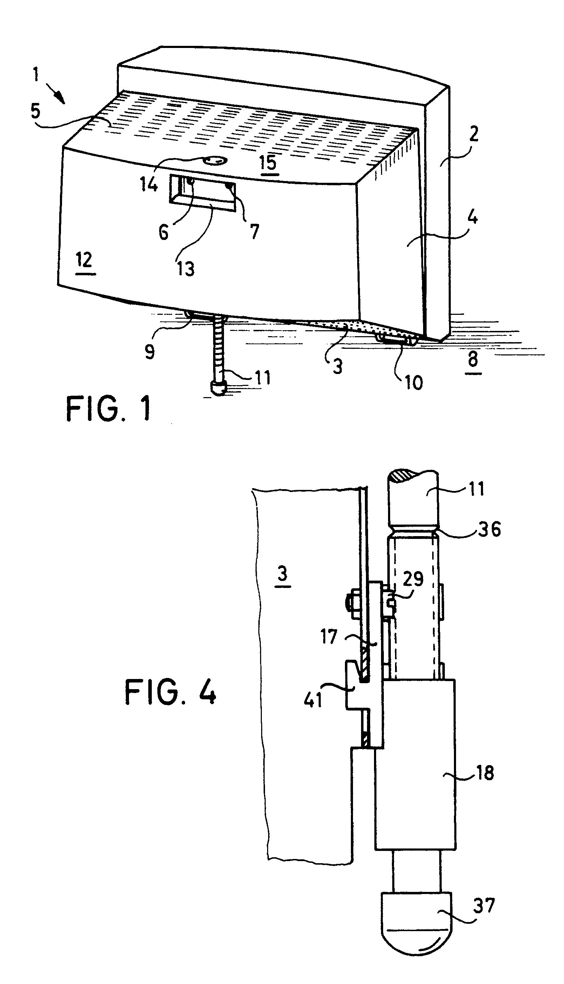

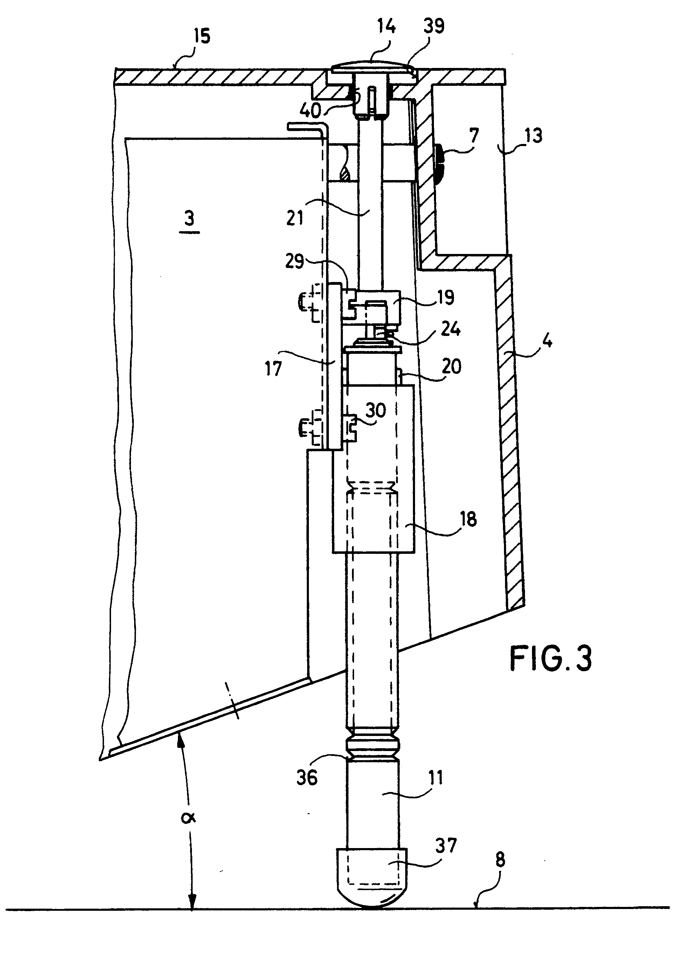

Das Gehäuse des Datensichtgerätes 1 besteht, wie FIG. 1 zeigt, einerseits aus einem Frontrahmen 2, an welchem die in FIG. 1 nicht sichtbare Bildschirmröhre gehalten sowie ein Chassis 3, von dem in FIG. 1 lediglich das gelochte Bodenteil zu sehen ist, befestigt sind. Andererseits wird das Gehäuse abgeschlossen von einer Haube 4, die in geeigneter Weise den Frontrahmen 2 hintergreift bzw. an diesem anliegt, die mit Schlitzen 5 versehen ist, die eine Kühlkonvektion ermöglichen, und die mit dem Chassis 3, wie dies insbesondere FIG. 3 zeigt, mittels Schrauben 6 und 7 verbunden ist. Ferner zeigt FIG. 1, daß sich das Datensichtgerät 1 auf einer ihm zugeordneten Stellfläche 8 einerseits mittels zweier an dem Frontrahmen 2 als abrollfähige Stützen 9 und 10 ausgebildeter Ansätze, andererseits auf einem Standbein 11 abstützt und daß an der Rückwand 12 der Haube 4 eine Griffmulde 13 ausgeformt ist. Die Bauform des Gehäuses läßt eine Neigungsverstellung von $\alpha = 20°$ zu. Dementsprechend ist auch die Höhenverstellbarkeit des Standbeines 11 ausgebildet.

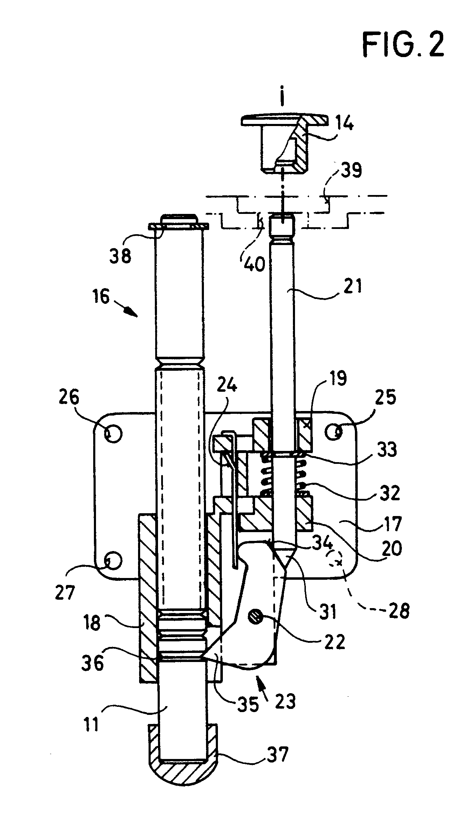

Mit 14 ist ein im wesentlichen bündig mit der Oberseite 15 der Haube 4 abschließender Auslöseknopf des noch zu beschreibenden Standbeinaggregates 16 (FIG. 2) bezeichnet. Die räumliche Zuordnung von Griffmulde 13 und Auslöseknopf 14 ist in diesem Falle derart gewählt, daß der Auslöseknopf 14 mit dem Handballen, der Handwurzel oder dem Daumen einer in die Griffmulde 13 greifenden Hand betätigt werden kann.

Wie FIG. 2 zeigt, ist das tragende Bauteil des eine vormontierbare Baugruppe darstellenden Standbeinaggregates 16 ein Kalter 17, an dem eine zylindrische Führung 18 für das entsprechend ausgebildete Standbein 11 sowie eine zweistellige Lagerung 19, 20, die einerseits der Führung, andererseits der losen Halterung einer Stange 21 dient, mit der der Auslöseknopf 14 vorzugsweise rastbar verbindbar ist, angeformt sind. Außerdem sind an dem Halter 17 eine Achse 22, auf der ein zweiarmiger Riegel 23 drehbar gelagert ist, und eine mit dem Riegel 23 in Wirkverbindung stehende Blattfeder 24 befestigt. Drei Bohrungen 25, 26 und 27 - mit 28 ist ein Fixierzapfen bezeichnet -sind für das Durchführen von Befestigungsschrauben vorgesehen, von denen in FIG. 3 zwei mit 29 und 30 bezeichnet sind. Ferner läßt sich der FIG. 2 entnehmen, daß der Stange 21, an deren freiem Ende ein Konus 31 ausgebildet ist, eine Druckfeder 32, die sich einerseits an der Lagerstelle 20, andererseits an einer auf der Stange 21 angebrachten Sicherungsscheibe 33 abstützt, zugeordnet ist.

Wenn der Auslöseknopf 14 betätigt wird, wirkt der Konus 31 in der Art eines Keilgetriebes mit einer an dem einen Arm des Riegels 23 ausgebildeten und an dem Konus 31 anliegenden Fläche 34 zusammen, wodurch die an dem anderen Arm des Riegels 23 ausgebildete Riegelspitze 35 aus einer der im Standbein 11 angebrachten Rastkerben 36 ausgehoben wird. Das Ausheben der Riegelspitze 35 ist jedoch erst dann möglich, wenn das Standbein 11 durch Anheben des Datensichtgerätes 1 entlastet wird. Diese Selbsthemmfunktion des dem Standbein 11 zugeordneten Riegelgesperres wird dadurch erzielt, daß durch die gegebene Anordnung das über den Auslöseknopf 14 auf den Riegel 23 im Gegenuhrzeigersinn einwirkende Drehmoment sehr klein ist gegenüber dem durch das Standbein 11 über die Riegelspitze 35 in Uhrzeigerrichtung eingeleiteten Drehmoment. Dabei wird durch unterschiedliche Flankenwinkel der Rastkerben 36 erreicht, daß einerseits die Wirkungsrichtung der vom Standbein 11 eingeleiteten Kraft nur um einen relativ kleinen Winkel gegenüber der Mittenlinie des Standbeines 11 geneigt ist und somit bezüglich der Drehachse 22 des Riegels 23 ein relativ großer Hebelarm erzielt wird, andererseits die Riegelspitze 35 zur Aufnahme der relativ hohen Last des Datensichtgerätes 1 ausreichend breitwinklig ausgebildet werden kann.

Ergänzend sei noch erwähnt, daß das Standbein zum Schutz der Stellfläche 8 mit einem Schuh 37 versehen ist und als axialer Anschlag eine am Standbein 11 befestigte Sicherungsscheibe 38 dient.

Ferner ist dem Auslöseknopf 14 in der Haube 4 eine Senkung 39 zugeordnet. Um eine möglichst lange Lagerung für die Auslöseeinrichtung zu erzielen, kann, wenn in der Lagerstelle 19 ausreichend Spiel vorgesehen wird, die Durchgangsbohrung 40 in bezug auf den Schaft des Auslöseknopfes 14 relativ eng toleriert sein.

Die Befestigungsvariante gemäß FIG. 4 zeigt, daß das Standbeinaggregat wenigstens teilweise auch mittels einer Renkverbindung (Nasen 41) am Chassis 3 befestigt bzw. gehaltert sein kann.

## Patentansprüche

1. Datensichtgerät mit neigbarer Bildschirm-Frontfläche, welches mittels vorzugsweise zweier gehäusefester, in einer zur Bildschirm-Frontfläche parallelen Flucht liegender, vorzugsweise abrollfähiger Stützen und einem in einer vertikalen Symmetrieebene verstellbaren im Gehäuse an der Rückwand des Datensichtgerätes gelagerten und mittig angeordneten Standbein auf einer ihm zugeordneten Stellfläche aufstellbar ist, wobei mit einem an der Oberseite des Gehäuses des Datensichtgerätes zugänglichen Knopf das Standbein verstellbar ist,
dadurch gekennzeichnet,
daß dem Standbein (11) ein unter der Wirkung der Schwerkraft selbsthemmendes Riegelgesperre (36, 23, 24) zugeordnet ist, der mit in dem Standbein angebrachten Rastkerben unter Federwirkung zusammen greift,
daß das Riegelgesperre (36, 23, 24) über eine Auslöseeinrichtung (21, 32) mit dem an der Oberseite (15) des Gehäuses des Datensichtgerätes (1) zugänglichen als Auslöseknopf (14) gebildeten Knopf getrieblich verbunden ist, wobei das Riegelgesperre in solcher Weise mit den Rastkerben zusammenarbeitet, daß Entriegelung des Standbeines durch Betätigung des Auslöseknopfes erst dann möglich ist, wenn das Standbein entlastet wird, und
daß an der Rückseite (12) des Gehäuses des Datensichtgerätes (1) eine Griffmulde (13) derart dem Auslöseknopf (14) zugeordnet ist, daß Anheben des Datensichtgerätes (1) und Entriegeln des Riegelgesperres (11, 36, 23, 24) gleichzeitig mit einer Hand durchführbar sind.

2. Datensichtgerät nach Anspruch 1,
dadurch gekennzeichnet,
daß das Riegelgesperre wenigstens ein dem Standbein (11) zugeordneter, gefederter Riegel (23) umfaßt und die Auslöseeinrichtung (21, 32) und das Standbein in einem mit dem Gehäuse des Datensichtgerätes (1) verbindbaren Halter (17) gelagert sind.

3. Datensichtgerät nach Anspruch 1,
dadurch gekennzeichnet,
daß als Standbein (11) eine zylindrische Stange vorgesehen ist und
daß am Umfang der Stange V-förmige Rastkerben (36) mit unterschiedlichen Flankenwinkeln ausgebildet sind.

4. Datensichtgerät nach Anspruch 2,
dadurch gekennzeichnet,
daß der Riegel (23) als zweiarmiger Hebel ausgebildet ist, welcher auf einer quer zur Achse des Standbeines (11) im Halter (17) befestigten Achse (22) drehbar gelagert ist,
daß an den einen Arm des Riegels (23) eine den am Standbein (11) ausgebildeten Rastkerben (36) entsprechende Spitze (35) angeformt ist und
daß dem anderen Arm des Riegels (23) eine an einer parallel zum Standbein (11) gefedert gelagerten Stange (21) der Auslöseeinrichtung (14, 21, 32), an deren einem Ende der Auslöseknopf (14) befestigt ist, ausgebildeter Konus (31) zugeordnet ist.

5. Datensichtgerät nach Anspruch 2,
dadurch gekennzeichnet,
daß der Halter (17) unmittelbar an dem rückwärtigen Teil des Gehäuses einer Haube (4) angeformt ist.

6. Datensichtgerät nach Anspruch 2,
dadurch gekennzeichnet,
daß der Halter (17) am Chassis (3) des Datensichtgerätes (1) befestigt ist.

7. Datensichtgerät nach Anspruch 1,
dadurch gekennzeichnet,
daß dem Auslöseknopf (14) in der Haube (4) eine Senkung zugeordnet ist und
daß der Auslöseknopf (14) derart rastbar an der Stange (21) angeordnet ist, daß er im nicht betätigten Zustand im wesentlichen bündig ist mit der Oberseite (15) des Datensichtgerätes (1).

**Claims**

1. Data display unit which has an inclinable screen front face and which is adjustable by means of preferably two supports fixed to the housing, lying in parallel flush arrangement with respect to the screen front face and preferably able to be rolled away, and an upright leg adjustable in a vertical plane of symmetry, arranged centrally and mountable in the housing on the rear wall of the data display unit on a positioning face associated with it, the upright leg being adjustable by means of a button accessible on the upper side of the housing of the data display unit, characterized in that associated with the upright leg (11) is a bar lock (36, 23, 24) self-locking under the action of gravity, which grips together with latching notches made in the upright leg under spring action, in that the bar lock (36, 23, 24) is connected in geared manner via a triggering device (21, 32) to the button formed as a trigger button (14) accessible on the upper side (15) of the housing of the data display unit (1), the bar lock cooperating with the latching notches in such a manner that unlocking the upright leg by operating the trigger button is only possible when the upright leg is unloaded, and in that on the rear side (12) of the housing of the data display unit (1) a finger recess (13) is associated with the trigger button (14) in such a manner that raising the data display unit (1) and unlocking the bar lock (11, 36, 23, 24) can be carried out at the same time with one hand.

2. Data display unit according to Claim 1, characterized in that the bar lock comprises at least one spring-loaded bar (23) associated with the upright leg (11), and the triggering device (21, 32) and the upright leg are housed in a holder (17) which may be connected to the housing of the data display unit (1).

3. Data display unit according to Claim 1, characterized in that a cylindrical rod is provided as the upright leg (11), and in that on the periphery of the rod, V-shaped latching notches (36) with different flank angles are constructed.

4. Data display unit according to Claim 2, characterized in that the bar (23) is constructed as a two-armed lever which is rotatably housed on a spindle (22) secured in the holder (17) transversely with respect to the axis of the upright leg (11), in that on one arm of the bar (23) is integrally formed a tip (35) corresponding to one of the latching notches (36) made on the upright leg (11), and in that a cone (31) constructed on a rod (21), resiliently mounted parallel to the upright leg (11), of the triggering device (14, 21, 32), on one end of which the trigger button (14) is secured, is associated with the other arm of the bar (23).

5. Data display unit according to Claim 2, characterized in that the holder (17) is integrally formed directly on the rearward facing part of the housing of a cover (4).

6. Data display unit according to Claim 2, characterized in that the holder (17) is secured to the chassis (3) of the data display unit (1).

7. Data display unit according to Claim 1, characterized in that a sunken part is associated with the trigger button (14) in the cover (4), and in that the trigger button (14) is arranged on the rod (21) to be able to latch in such a manner that in the non-operated state it is substantially flush with the upper side (15) of the data display unit (1).

**Revendications**

1. Terminal à écran de visualisation avec une face frontale de l'écran de visualisation inclinable, lequel peut être installé avec, de préférence, deux supports stationnaires situés dans un alignement parallèle à ladite face frontale de l'écran de visualisation et étant, de préférence, enroulables, ainsi qu'avec une béquille réglable dans un plan de symétrie vertical, montée dans le boîtier sur le panneau arrière dudit terminal à écran de visualisation et disposée, dans une position centrée, sur un emplacement d'installation qui lui est affectée, ladite béquille étant réglable à l'aide d'un bouton accessible sur la face supérieure du boîtier dudit terminal à écran de visualisation, caractérisé par le fait qu'à la béquille (11) est affecté un cliquet d'arrêt (36, 23, 24) auto-bloquant sous l'effet de la gravité qui engrène, sous l'action d'un ressort, avec des encoches d'arrêt usinées dans ladite béquille, que ledit cliquet d'arrêt (36, 23, 24) est fonctionnellement relié, par l'intermédiaire d'un dispositif de déclenchement (21, 32), avec le bouton de déclenchement disponible sur la face supérieure (15) du boîtier du terminal à écran de visualisation (1) et formé comme bouton de déclenchement (14), ledit cliquet d'arrêt coopérant avec les encoches d'arrêt de telle sorte que le déverrouillage de la béquille par l'actionnement du bouton de déclenchement ne sera possible que lorsque ladite béquille est délestée, et qu'à la face arrière (12) du boîtier du terminal à écran de visualisation (1) est disposée une cavité de préhension (13) qui est associée au bouton de déclenchement (14) de telle sorte que le soulèvement du terminal à écran de visualisation (1) et le déverrouillage du cliquet d'arrêt (11, 36, 23, 24) sont réalisables simultanément d'une seule main.

2. Terminal à écran de visualisation selon la revendication 1, caractérisé par le fait que le cliquet d'arrêt (11, 36, 23, 24) comprend au moins un verrou (23) monté sur ressort associé à la béquille (11) et que le dispositif de déclenchement (21, 32) ainsi que la béquille (11) sont fixés sur une platine (17) pouvant être assemblée au boîtier du terminal à écran de visualisation (1).

3. Terminal à écran de visualisation selon la revendication 1, caractérisé par le fait que c'est une tige cylindrique qui est prévue comme béquille (11) et que des encoches d'arrêt (36) en forme de V avec des angles de flanc différents sont usinées sur le pourtour de la tige.

4. Terminal à écran de visualisation selon la revendication 2, caractérisé par le fait que le verrou (23) est réalisé sous forme de levier intermobile qui est monté à rotation sur un axe (22) fixé transversalement à l'axe de la béquille (11) sur la platine (17), que sur l'un des bras du verrou (23) est formée une pointe (35) correspondant aux encoches d'arrêt (36) usinées sur la béquille (11) et qu'à l'autre bras du verrou (23) est associé un cône (31) formé sur une tige (21), montée sur ressort parallèlement à la béquille (11), du dispositif de déclenchement (14, 21, 32), sur l'une des extrémités de laquelle est fixé le bouton de déclenchement (14).

5. Terminal à écran de visualisation selon la revendication 2, caractérisé par le fait que la platine (17) est moulée directement sur la partie postérieure du boîtier d'un capot (4).

5

6. Terminal à écran de visualisation selon la revendication 2,
caractérisé par le fait
que la platine (17) est fixée sur le châssis (3) du terminal à écran de visualisation (1).

7. Terminal à écran de visualisation selon la revendication 1,
caractérisé par le fait
qu'au bouton de déclenchement (14) est associée une cavité dans le capot (4) et
que ledit bouton de déclenchement (14) est disposé de manière à pouvoir s'encliqueter sur la tige (21) de telle sorte que, dans l'état non actionné, il soit, pour l'essentiel, à fleur de la face supérieure (15) du terminal à écran de visualisation (1).

FIG. 1

FIG. 4

FIG.2

FIG.3